# EUROPEAN PATENT SPECIFICATION

(11) **EP 0 430 211 B1**
(45) Date of publication and mention of the grant of the patent: **12.03.1997**
(21) Application number: 90122753.8
(22) Date of filing: 28.11.1990
(51) Int. Cl.: H04N 5/95

(54) **Time base correcting apparatus**
Zeitbasis-Korrekturanordnung
Dispositif de correction de base de temps

(30) Priority: 28.11.1989 JP 308069/89
(43) Date of publication of application: 05.06.1991
(73) Proprietor: SONY CORPORATION, Tokyo (JP)
(72) Inventor: Suzuki, Yoshinori, Shinagawa-ku, Tokyo (JP); Nakamura, Yuji, Shinagawa-ku, Tokyo (JP)
(74) Representative: Schmidt-Evers, Jürgen, Dipl.-Ing.

(56) References cited:
- US-A- 3 860 952
- US-A- 4 063 284
- US-A- 4 134 131
- US-A- 4 389 678
- PATENT ABSTRACTS OF JAPAN vol. 6, no. 211 (E-137)23 October 1982 & JP-A-57 116 485

## Description

### BACKGROUND OF THE INVENTION

### Field of the Invention

The present invention generally relates to time base correcting apparatus and, more particularly, to a time base correcting apparatus for time-base-correcting a reproduced video signal reproduced by a rotary magnetic head from oblique tracks on a magnetic tape transported at a desirable tape running speed relative to a tape running speed in the recording mode.

### Description of the Prior Art

A conventional time base correcting apparatus of, for example, a BETACAM type VTR (video tape recorder) includes respective memories in which a reproduced video signal (a luminance signal or color difference signals) reproduced from slant tracks on a magnetic tape by a rotary magnetic head is written or from which the same is read out. The time base correcting apparatus is also provided with a write in-line address counter for generating a write in-line address signal for the memories, a write line address counter which generates a write line address signal and a write clock signal generating circuit for generating a write in-line address increment clock signal and a write line address increment clock signal each being synchronized with a horizontal synchronizing signal separated from the reproduced video signal. These signals are supplied to the write in-line address counter and the write line address counter, respectively. The time base correcting apparatus is also provided with a read in-line address counter and a read line address counter for generating a read line address signal for the memory and a read clock signal generating circuit for generating a read in-line address increment clock signal and a read line address increment clock signal each being synchronized with a reference horizontal synchronizing signal and which supplies the same to the read in-line address counter and the read line address counter, thus a jitter component (time base error) of the reproduced video signal being corrected.

The write clock signal and the write line address signal follow the jitter component of the reproduced video signal, and the read clock signal and the read line address signal are each synchronized with the reference horizontal synchronizing signal so that while the read line address signal is changed at a constant speed, the write line address signal depends on the reproducing speed of the VTR. As a result, in the variable speed reproduction mode of the VTR (mode wherein a reproduction is performed at a tape speed different from that of the recording mode), the write and read line address signals for the memories will frequently coincide with each other, so that the reproduced video signal cannot be correctly written in and read-out from the memory.

Therefore, the phenomenon in which the write and read address signals coincide with each other has been avoided by the following method.

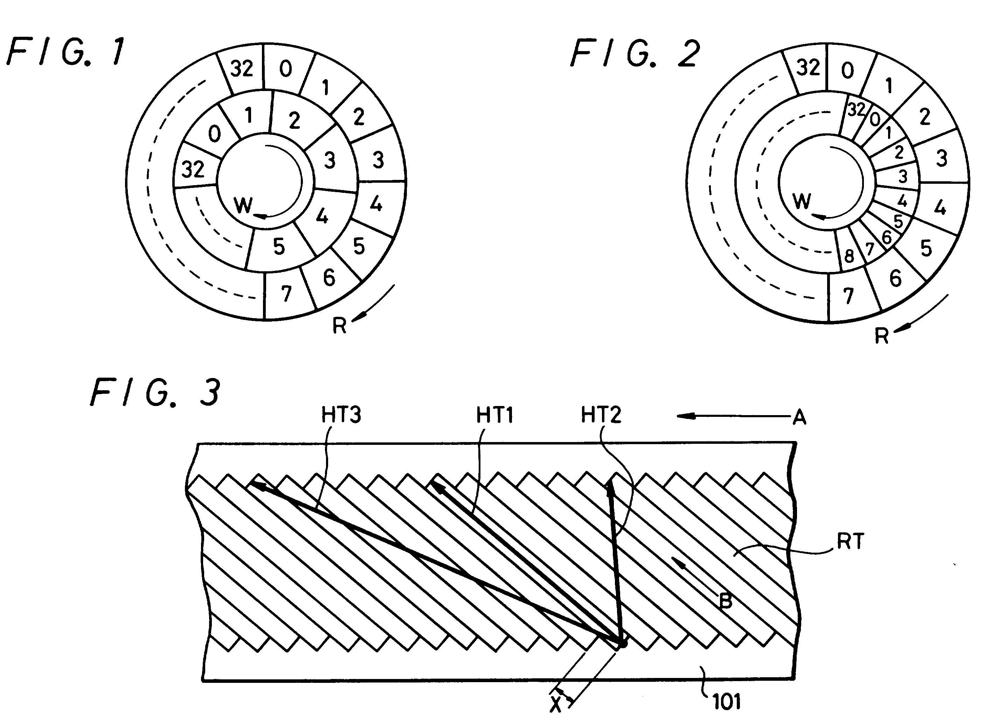

Fig. 1 shows address arrangement of the write and read line address signals and the address arrangement is sectioned by internal and external rings. These signals are used in the FWD (forward direction) variable speed reproduction mode for a memory in which a video signal of, for example, 32 line periods can be stored. In the FWD variable speed reproduction mode, the cycle of the horizontal synchronizing signal in the reproduced video signal becomes longer than that of the reference horizontal synchronizing signal so that the cycle of the write line address signal becomes longer than that of the read line address signal. Thus, as shown in Fig. 1, in the addresses behind, for example, address 3, the addresses of write and read line address signals become coincident with each other. Therefore, in that event, lines of n (integer) lines before in the memory are again read out so that addresses do not coincide with each other.

Fig. 2 shows addresses of the write and read address signals in the REV (reverse direction) variable reproduction mode similarly to Fig. 1.

In the REV variable speed reproduction mode, since the cycle of the horizontal synchronizing signal involved in the reproduced video signal becomes shorter than that of the reference horizontal synchronizing signal, the cycle of the write line address signal becomes shorter than that of the read line address signal. Therefore, as shown in Fig. 2, in the addresses behind, for example, address 3, the addresses of write and read line address signals become coincident with each other. Then, in that event, lines of the memory n (integer) lines before the present line are read out, whereby addresses do not coincide with each other.

A time base correcting apparatus is arranged so that the write address does not coincide with the read address (see Japanese Patent Laid-Open Gazette No. 52-10022).

Incidentally, since a conventional time base correcting apparatus is arranged to reproduce a video signal which is, for example, sixteen horizontal periods ahead of the reference horizontal synchronizing signal, in the normal reproduction mode at a normal speed and in the FWD or REV variable speed reproduction mode at a speed slightly higher than the normal speed, addresses of write and read address signals do not coincide with each other substantially. However, if the speeds of the FWD and REV variable reproductions become considerably high, the addresses of the write and read address signals coincide with each other. Further, since the reproduced video signal is sixteen horizontal periods ahead of the reference horizontal synchronizing signal, the addresses of the address signals do not coincide with each other at the upper area of a picture in the variable speed reproduction mode. However, the addresses of the address signals coincide with each other at the lower area of the picture so that the above mentioned switching of read address is performed just before the reproduction of the lower area starts.

By such a control, in the conventional time base correcting apparatus, the video signal is written in and read out from the memory correctly in the high variable speed reproduction mode, whereby a video signal in the variable reproduction can be reproduced as a video image on a monitor receiver.

However, the conventional time base correcting apparatus in which the video signal in the variable playback mode can be reproduced as the video image encounters the following problems. That is, the problems of "picture contraction" and "picture expansion" occur.

A fundamental principle of picture contraction and picture expansion will be explained with reference to Fig. 3. Fig. 3 is a diagrammatic view of a section of a magnetic tape, and illustrating record tracks thereon in which a video signal is recorded by a Betacam type video tape recorder. In Fig. 3, reference numeral 101 designates a magnetic tape, and reference letter RT designates record tracks formed on the magnetic tape 101. An arrow A represents a tape running direction in the forward reproduction mode and an arrow B represents the moving direction of a reproducing head. Further, reference numeral HT1 represents a locus of the head in the normal reproduction mode, HT2 represents a locus of the head in the forward reproduction mode and HT3 represents a locus of the head in the reverse reproduction mode, respectively. A cross mark represents an alignment difference between the record tracks RT in the longitudinal direction of the track.

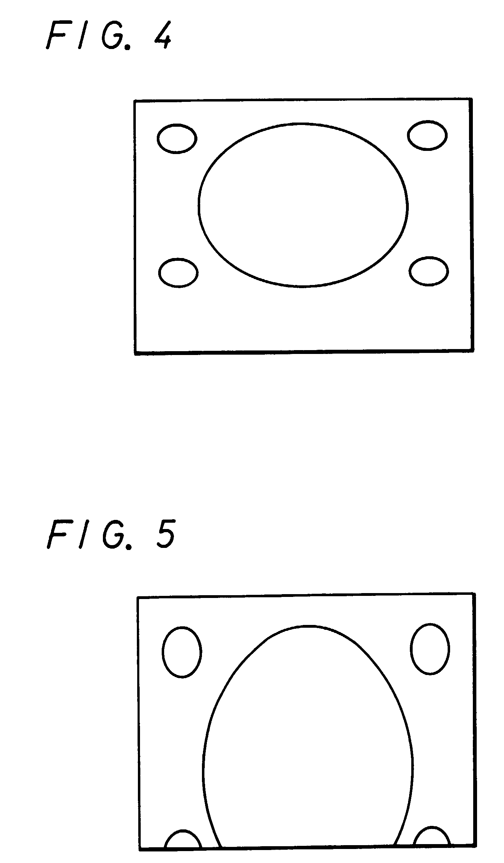

Incidentally, the rotational speed of the rotary head is made constant so that, in any of normal reproduction mode, forward reproduction mode or in the reverse reproduction mode, a time required by the rotary head to move from the starting portion to the ending portion of each of the head loci HT1, HT2 and HT3 is equal to each other. Let us consider the amount of informations of the video signal involved in the head locus HT2 of the forward reproduction mode and the head locus HT3 of the reverse reproduction mode. As shown in Fig. 3, since the track alignment difference X exists between the respective record tracks RT, the information amount of the head locus HT2 becomes smaller than the information amount involved in the head locus HT1 in the normal playback mode, and the information amount of the head locus HT3 becomes larger than the information amount of the head locus HT1 in the normal reproduction mode. As a result, as earlier noted, the cycle of the horizontal synchronizing signal of the reproduced video signal in the forward reproduction mode becomes longer than that of the reference synchronizing signal, while the cycle of the horizontal synchronizing signal of the reproduced video signal in the reverse reproduction mode becomes shorter than that of the reference synchronizing signal. When such reproduced video signal is written in a memory in the unit of lines in accordance with the write line address signal and is read out from the memory in the unit of lines in accordance with the read line address signal, the number of lines read-out during one cycle period (one field period) of the reference vertical synchronizing signal is constant so that, with respect to the reproduced video signal involved in the head locus HT2 in the forward reproduction mode, information from the starting portion to the ending portion of the head locus HT2 is read out, while with respect to the reproduced video signal involved in the head locus HT3 in the reverse reproduction mode, the line numbers of one field period from the starting end portion of the head locus are read out. The lines up to the ending portion of the head locus HT3 from the first one field period will not be read. Consequently, a circle in the normal reproduction mode is reproduced as an ellipse elongated in the horizontal direction as shown in Fig. 4, i.e. so-called "picture contraction" occurs. In the reverse reproduction mode, the circle in the normal reproduction mode is reproduced as an ellipse elongated in the vertical direction and whose lower portion is dropped out as shown in Fig. 5, i.e. so-called "picture expansion" occurs. The degree of "picture contraction" or "picture expansion" depends on the reproducing speed of the forward or reverse reproduction mode.

Furthermore, according to the conventional control operation, a coincidence of address is avoided in the lower portion of the picture, resulting in a picture being distorted, in addition to the problem of "picture expansion".

US-A-4,063,234 discloses a time base corrector comprising a plurality of registers having repeating cyclic orders or sequences of writing and reading. If reading operation of data from one of register has not been finished when data is completely written in prior one of registers, the same data is rewritten from the prior register. And if writting operation of data in one of registers has not been finished when data is completely read from next one of registers, the same data is read from the next register again. So that the collision of writing and reading operation is prevented before the occurence thereof. This document also describes that reading and writing operation is controlled in response to a detected drop out of input video signal to delete the drop-out signal.

JP-A-57 116 485 discloses a time base corrector in which when a writting address of a memory overtakes a reading address, counting up of the writing address is stopped for two horizontal lines period and when a reading address of a memory overtakes a writing address, the reading address is jumped two horizontal lines period backward.

### OBJECTS AND SUMMARY OF THE INVENTION

Accordingly, it is an object of the present invention to provide an improved time base correcting apparatus which can substantially eliminate the aforenoted shortcomings and disadvantages encountered with the prior art.

More specifically, it is another object of the present invention to provide a time base correcting apparatus in which a picture can be reproduced without distortion regardless of the running speed and running direction of the magnetic tape having slant tracks on which the reproduced video signal is recorded and from which the same is reproduced by the rotary magnetic head.

These objects are achieved by means of the features of claim 1. The depending claims show advantageous developments of claim 1.

The above, and other objects, features and advantages of the present invention will be apparent in the following detailed description of an illustrative embodiment when read in conjunction with the accompanying drawings, in which like reference numerals are used to identify the same or similar parts in the several views.

### BRIEF DESCRIPTION OF THE DRAWINGS

Fig. 1 is a schematic diagram used to explain the problem of the prior art in which write and read addresses coincide with each other in the forward variable speed reproduction;
Fig. 2 is a schematic diagram used to explain the problem of the prior art in which write and read addresses coincide with each other in the reverse variable speed reproduction;
Fig. 3 is a diagrammatic view of a section of a magnetic tape, and illustrating record tracks thereon in which a video signal is recorded by a BETACAM type video tape recorder;
Fig. 4 is a schematic diagram of a video image reproduced on a picture screen of a monitor receiver in the forward variable speed reproduction mode, and to which reference will be made in explaining the problem of so-called picture contraction;
Fig. 5 is a schematic diagram of a video image reproduced on a picture screen of a monitor receiver in the reverse variable speed reproduction mode, and to which reference will be made in explaining the problem of so-called picture expansion;
Fig. 6 (formed of Figs. 6A and 6B drawn on two sheets of drawings to permit the use of a suitably large scale) is a circuit block diagram showing an embodiment of a time base correcting apparatus according to the present invention;
Figs. 7A - 7J are timing charts respectively used to explain the operation such that the writing of a reproduced digital video signal in a memory is removed in the reverse variable speed reproduction mode; and
Figs. 8A - 8I are timing charts respectively used to explain the operation such that a reproduced digital video signal written in a memory is read doubly in the forward variable speed reproduction mode.

### DETAILED DESCRIPTION OF THE PREFERRED EMBODIMENT

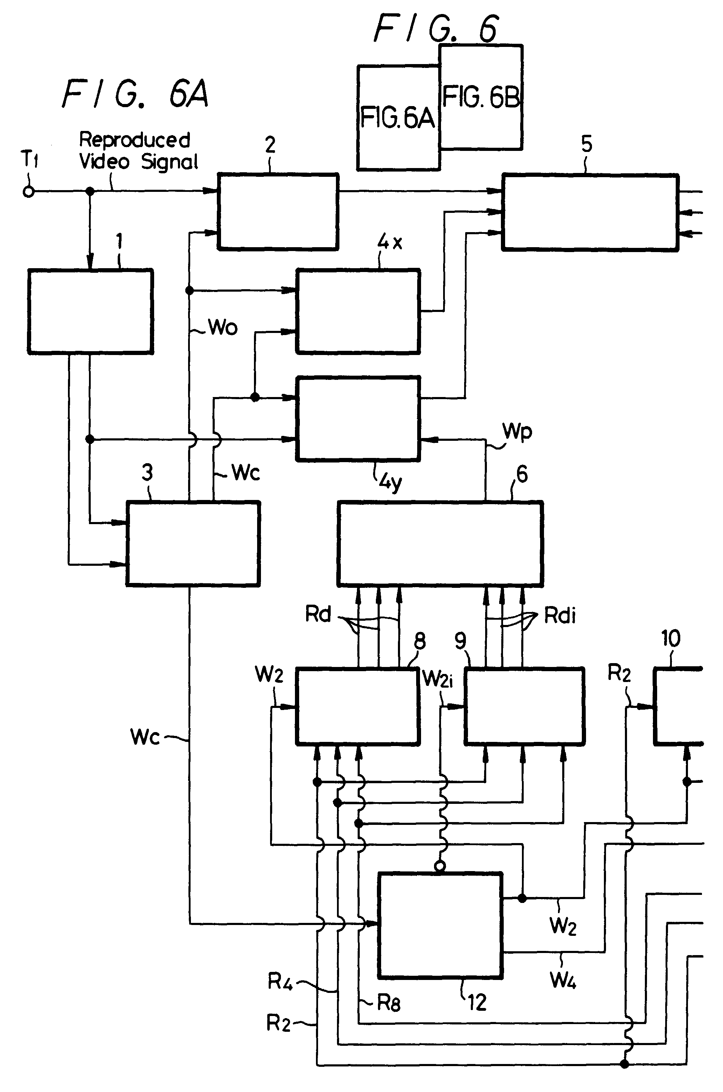

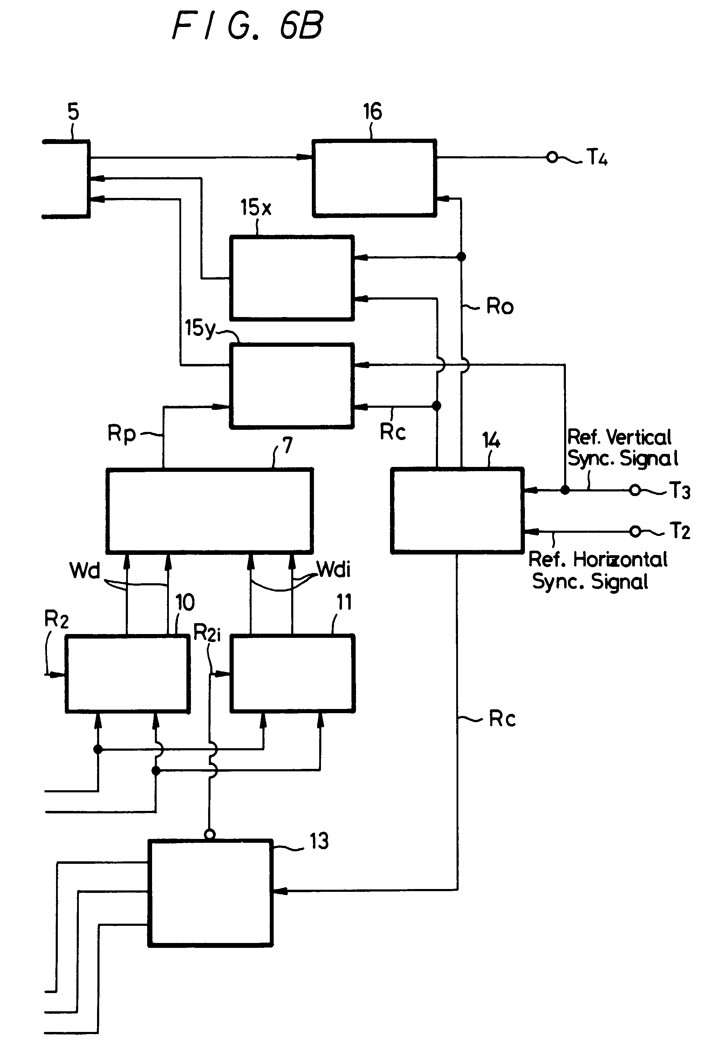

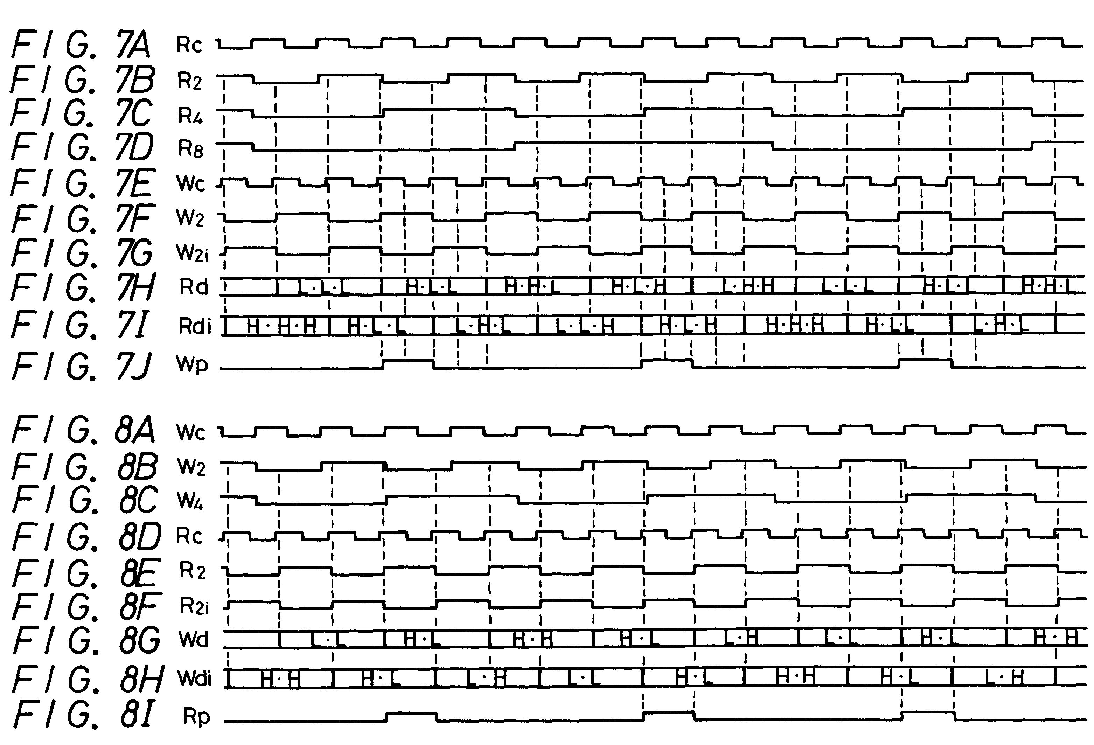

An embodiment of a time base correcting apparatus according to the present invention will hereinafter be described in detail with reference to Figs. 6 to 8. In this case, the present invention is applied to a time base correcting apparatus for use with a BETACAM type video tape recorder.

Fig. 6 shows an embodiment of the time base correcting apparatus according to the present invention.

In this embodiment, an FM (frequency modulated) luminance signal and FM color difference signals reproduced from slant tracks of the magnetic tape by a rotary magnetic head are FM-demodulated and then supplied to a pair of time base correcting apparatus of the same arrangement, respectively.

Referring to Fig. 6, a reproduced video signal (luminance signal or color difference signal) applied to an input terminal T₁ is supplied to a synchronizing separating circuit 1 and an A/D (analog-to-digital) converter 2. A write clock generating circuit 3 responds to horizontal and vertical synchronizing signals from the synchronizing separating circuit 1 to generate a write in-line address increment clock pulse W₀ synchronized with the reproduced horizontal synchronizing signal and whose frequency is, for example, 910 times as high as the frequency of the reproduced horizontal synchronizing signal, and a line address increment clock pulse W_{c} synchronized with the reproduced horizontal synchronizing signal and whose frequency is the same as the frequency of the reproduced horizontal synchronizing signal and whose duty ratio is 50%. The write clock pulse W₀ from the write clock pulse generating circuit 3 is supplied to the A/D converter 2 and to a write in-line address counter 4x which will be described later. The clock pulse W_{c} is supplied to the write in-line address counter 4x, a write line address counter 4y which will be described later, and a frequency-dividing circuit 12, later referred to.

A memory 5 is adapted to store therein a digital video signal of, for example, 32 line periods. The write in-line address counter 4x counts the clock pulse W₀ from the write clock generating circuit 3 and is reset by the clock pulse W_{c}, thereby to generate an in-line address signal. The write line address counter 4y counts the clock pulse W_{c} from the write clock generating circuit 3 and is reset by the vertical synchronizing signal from the synchronizing separating circuit 1, thereby to generate a line address signal. The in-line and line address signals from the write in-line address counter 4x and the write line address counter 4y are supplied to the memory 5, and the digital video signal from the A/D converter 2 is written into the memory 5 on the basis of these address signals.

A read clock generating circuit 14 responds to reference horizontal and vertical synchronizing signals applied to input terminals T₂ and T₃ to generate an in-line address increment read clock pulse R₀ synchronized with the reference horizontal synchronizing signal and whose frequency is 910 times as high as the frequency of the reference horizontal synchronizing signal, that is, 14.33 MHz and a clock pulse R_{c} synchronized with the reference horizontal synchronizing signal and whose frequency is the same as the frequency of the reference horizontal synchronizing signal and whose duty ratio is 50%. The read clock pulse R₀ from the read clock generating circuit 14 is supplied to a D/A (digital-to-analog) converter 16 and a read in-line address counter 15x, later referred to, while the clock pulse R₀ is supplied to the read in-line address counter 15x, a read line address counter 15y, later referred to, and a frequency-dividing circuit 13 which will be described later, respectively. The read in-line address counter 15x counts the read clock R₀ generated from the read clock generating circuit 14 and is reset by the clock pulse R_{c}, thereby to generate an in-line address signal. The read line address counter 15y counts the clock pulse R_{c} from the read clock generating circuit 14 and is reset by the reference vertical synchronizing signal from the input terminal T₃, thereby to generate a line address signal. Then, the address signals from the read in-line address counter 15x and the read line address counter 15y are supplied to the memory 5, and the digital reproduced video signal (luminance signal or color difference signal) stored in the memory 5 is read-out on the basis of these address signals. The digital reproduced video signal read out from the memory 5 is converted into an analog reproduced video signal by the D/A converter 16, and fed to an output terminal T₄.

The frequency-dividing circuit 13 at the read-out side divides the clock pulse R_{c} from the read clock generating circuit 14 to produce 1/2-, 1/4- and 1/8-frequency-divided signals, and supplies frequency-divided outputs R₂, R₄, and R₈ to latch circuits 8, 9 at the write side as data. The 1/2-frequency-divided output R₂ and a frequency-divided output R₂ᵢ of opposite phase from the frequency-dividing circuit 13 are supplied to latch circuits 10 and 11 at the read-out side as a latch pulse, respectively. In the latch circuits 8 and 9 at the write side, three frequency-divided outputs R₂, R₄ , R₈ from the frequency-dividing circuit 13 at the read-out side are latched in response to frequency-divided outputs W₂ and W₂ᵢ of positive and opposite phases from the frequency-dividing circuit 12 at the write side which will be described later, and latched outputs R_{d} and R_{di} are supplied to a coincidence detecting circuit 6 at the write side.

The coincidence detecting circuit 6 generates a coincidence detecting signal Wₚ during a period in which the latch output R_{d} from the latch circuit 8 coincides with the latch output R_{di} from the latch circuit 9, and the coincidence detecting signal Wp is supplied to the write line address counter 4y. During a period in which the latch outputs R_{d} and R_{di} from the latch circuits 8 and 9 coincide with each other, the supply of the line address increment clock pulse W_{c} from the write clock generating circuit 3 to the write address counter 4y is inhibited, whereby the writing of the digital reproduced video signal from the A/D converter 2 in the memory 5 is removed by one line amount.

The frequency-dividing circuit 12 on the write side frequency-divides the clock pulse W_{c} from the write clock generating circuit 3 to provide 1/2- and 1/4-frequency-divided signals, respectively, and supplies frequency-divided outputs W₂ and W₄ to the latch circuits 10 and 11 at the read-out side as data. Also, the 1/2-frequency-divided output W₂ and a frequency-divided output W_{2 i} of opposite phase are respectively supplied to the latch circuits 8 and 9 on the write side as a latch pulse. In the latch circuits 10 and 11 at the read-out side, the two frequency-divided outputs W₂ and W₄ from the frequency-dividing circuit 12 at the write side are latched in response to frequency-divided outputs R₂ and R₂ᵢ of positive and opposite phases from the frequency-dividing circuit 13 at the read-out side. Latched outputs W_{d} and W_{di} from the latch circuits 10 and 11 are supplied to a coincidence detecting circuit 7 at the write side. The coincidence detecting circuit 7 generates a coincidence detecting signal Rₚ during a period in which the latched output W_{d} from the latch circuit 10 coincides with the latched output W_{di} from the latch circuit 11, and the coincidence detecting signal Rₚ is supplied to the read line address counter 15y. During the period in which the latched outputs W_{d} and W_{di} from the latch circuits 10 and 11 coincide with each other, the supply of the clock pulse R_{c} from the read clock generating circuit 14 to the write address counter 15y is inhibited and the digital reproduced video signal of one line amount is read out from the memory 5 twice.

An operation of the time base correcting apparatus of Fig. 6 will be described next with reference to Figs. 7A - 7J and Figs. 8A - 8I.

An operation of the reverse (REV) variable speed reproduction mode will be explained first. Figs. 7A - 7J are timing charts to which reference will be made in explaining how the writing of the digital reproduced video signal in the memory 5 is removed when a video signal reproduced in the reverse variable speed reproduction mode is supplied to the input terminal T₁.

Fig. 7A shows the clock pulse R_{c} which is supplied from the read clock generating circuit 14 to the frequency-dividing circuit 13 at the read-out side, and Figs. 7B, 7C and 7D show the frequency-divided outputs R₂, R₄ and R₈ which result from frequency-dividing the clock pulse R_{c} by the frequency-dividing circuit 13 by 2, 4 and 8. Fig. 7E shows the clock pulse W_{c} from the write clock generating circuit 3, and Fig. 7F shows the frequency-divided output W₂ which results from frequency-dividing the clock pulse W_{c} by the frequency-dividing circuit 12 at the write side by 2, and Fig. 7G shows the frequency-divided output W₂ᵢ whose phase is opposite to that of the 1/2-frequency-divided output W₂.

The 1/2-, 1/4- and 1/8-frequency-divided outputs R₂, R₄ and R₈ from the frequency-dividing circuit 13 at the read-out side are supplied to the latch circuits 8 and 9, in which they are latched by the frequency-divided outputs W₂ and W₂ᵢ supplied thereto as the latch pulses of positive and opposite phases from the frequency-dividing circuit 12 at the write side and then supplied to the coincidence detecting circuit 6. Fig. 7H shows data arrangement of the 3-bit latch output R_{d} of the 1/2-, 1/4- and 1/8-frequency-divided signals R₂, R₄ and R₈ latched by the frequency-divided output W₂ of positive phase, and Fig. 7I shows data arrangement of the 3-bit latch output R_{di} of the 1/2-, 1/4- and 1/8-frequency-divided signals R₂, R₄ and R₈ latched by the frequency-divided output W₂ᵢ of opposite phase.

Having detected that contents of data of two 3-bit latched outputs R_{d} and R_{di} are coincident with each other, the coincidence detecting circuit 6 generates the coincidence detecting signal Wₚ shown in Fig. 7J and this signal is fed to the write line address counter 4y. The write line address counter 4y inhibits the supply of the clock pulse W_{c} thereto from the write clock generating circuit 3 and holds a count value provided just before the period in which the detected signal goes "1" (high level), i.e. line address when the detecting signal Wₚ from the coincidence detecting circuit 6 is at "1". When the detecting signal Wₚ goes "0" (low level), the counter 4y starts the count of the clock pulse W_{c} from the count value thus held therein (line address). Accordingly, during the period in which the detecting signal Wₚ is at "1", the digital reproduced video signal supplied from the A/D converter 2 to the memory 5 is removed by one line amount.

An operation in the forward (FWD) variable speed reproduction mode will be described. Figs. 8A - 8I are timing charts respectively used to explain the double reading, that is, the way of how the digital reproduced video signal written in the memory 5 is read-out two times when the reproduced video signal reproduced in the forward variable speed reproduction mode is applied to the input terminal T₁ . Fig. 8A shows the clock pulse W_{c} supplied from the write clock generating circuit 3 to the frequency-dividing circuit 12, and Fig. 8B and 8C show the frequency-divided outputs W₂ and W₄ which result from frequency-dividing the clock pulse W_{c} by the frequency-dividing circuit 12 at the write side by 2 and 4. Fig. 8D shows the clock pulse R_{c} from the read clock generating circuit 14. Fig. 8E shows the frequency-divided output R₂ which results from frequency-dividing the clock pulse R_{c} by the frequency-dividing circuit 13 at the read-out side by 2, and Fig. 8F shows the frequency-divided output R₂ᵢ whose phase is opposite to that of the 1/2-frequency-divided output R₂.

The 1/2- and 1/4-frequency-divided outputs W₂ and W₄ from the frequency-dividing circuit 12 at the write side are respectively supplied to the latch circuits 10 and 11 at the read-out side, in which they are latched by the frequency-divided outputs R₂ and R₂ᵢ supplied thereto from the frequency-dividing circuit 13 at the read-out side as latch pulses of positive and opposite phases. Latched outputs W_{d} and W_{di} are supplied to the coincidence detecting circuit 7. Fig. 8G shows data arrangement of 2-bit latched output W_{d} of 1/2- and 1/4-frequency-divided outputs W₂ and W₄ , latched by the frequency divided output R₂ of positive phase, and Fig. 8H shows data arrangement of 2-bit latch output W_{di} of the 1/2- and 1/4-frequency-divided outputs W₂ and W₄, latched by the frequency-divided output R₂ᵢ of opposite phase.

Having detected that the two latched outputs W_{d} and W_{di} are coincident with each other, the coincidence detecting circuit 7 generates the coincidence detected signal Rₚ shown in Fig. 8I and this signal is supplied to the read line address counter 15y. The read line address counter 15y inhibits the supply of the clock pulse R_{c} thereto from the read clock generating circuit 14, and holds the count value provided just before the period in which the detected signal goes "1", that is, the line address when the detected signal Rₚ from the coincidence detecting circuit 7 is at "1". When the detected signal Rₚ goes "0", the counter 15y starts the counting of the clock pulse R_{c} from the count value thus held (line address). Therefore, during the period in which the detected signal Rₚ is at "1", one line amount of the digital reproduced video signal stored in the memory 5 is read out twice.

The range of the reproducing speed in which the occurrence of "picture contraction" or "picture expansion" can be avoided in the above-mentioned time base correcting apparatus is determined by the bit number of data used to detect the coincidence of address, that is, the output bit numbers of the frequency-dividing circuits 13 and 12. Here, assuming that m assumes the output bit number of the frequency-dividing circuit 13 and n assumes the output lit number of the frequency-dividing circuit 12, the range of the above-mentioned reproducing speed falls in a range in which a magnification of the cycle of the reproduced horizontal synchronizing signal relative to the reference horizontal synchronizing signal becomes from the reproducing speed of ($\frac{\text{1}}{{\text{2}}^{\text{n}} \text{-1}}$) times to the reproducing speed of (2ⁿ - 1) times.

In this embodiment, since m = 3 and n = 2, in that case the range of the reproduction speed lies in that the above-mentioned magnification becomes 1/3 times to 7 times. In this connection, the reproduction speed which provides the above magnification is about ±50 times the speed of the normal reproducing mode. Further, if the ratio of the cycle of the reproduced horizontal synchronizing signal to that of the reference horizontal synchronizing signal is small, the number of bit may be also small. Therefore, if the number of bit of the frequency-dividing circuits 12 and 13 is increased, the apparatus can also cope with the reproduction in the variable speed reproduction at speed higher than the above-mentioned tape running speed.

While the above-described embodiment employs a component signal as the reproduced video signal, it is needless to say that a composite signal can be employed.

## Claims

1. A time base correcting apparatus comprising a memory (5) for storing a reproduced video signal reproduced by a rotary magnetic head from slant tracks of a magnetic tape (101) which is transported at a desirable tape running speed relative to a tape running speed upon recording mode, a write in-line address counter (4x) for generating a write in-line address signal and a write line address counter (4y) for generating a write line address signal for said memory (5), a write clock signal generating circuit (3) for generating a write in-line address increment clock signal and a write line address increment clock signal each being synchronized with a horizontal synchronizing signal separated from said reproduced video signal, and for supplying the same to said write in-line address counter (4x) and said write line address counter (4y), a read in-line address counter (15x) for generating a read in-line address signal and a read line address counter (15y) for generating a read line address signal for said memory (5), and a read clock signal generating circuit (14) for generating a read in-line address increment clock signal and a read line address increment clock signal each being synchronized with a reference horizontal synchronizing signal and for supplying the same to said read in-line address counter (15x) and to said read line address counter (15y),
**characterized by**
a first divider (12) for generating a first periodical signal by dividing the reproduced horizontal synchronizing signal,
a second divider (13) for generating a second periodical signal by dividing the reference horizontal synchronizing signal,
a detecting means (6 to 11) for detecting whether a single cycle of the first periodical signal is included in a single cycle of the second periodical signal, case a), or vice versa, case b), and
control means (6,7) for holding the output values of either the write line address counter (4y) in case a) or of the read line address counter (15y) in case b) for a one-line period.

2. The time base correcting apparatus as cited in claim 1, wherein said detecting means comprises
a first latch circuit (8) for latching said second frequency-divided data on the basis of 1/2-frequency-divided data involved in said second frequency-divided data, a second latch circuit (9) for latching said second frequency-divided data on the basis of an inverted signal of a 1/2-frequency-divided data involved in said second frequency-divided data, a third latch circuit (10) for latching said first frequency-divided data on the basis of the 1/2-frequency-divided data involved in said first frequency-divided data, a fourth latch circuit (11) for latching said first frequency-divided data on the basis of an inverted signal of the 1/2-frequency-divided data involved in said first frequency-divided data, a first coincidence detecting circuit (6) for detecting a coincidence between outputs of said first and second latch circuits, and a second coincidence detecting circuit (7) for detecting a coincidence between outputs of said third and fourth latch circuits.

3. The time base correcting apparatus as cited in claims 1 or 2, wherein said control means (6, 7) inhibits the supply of said
write line address increment clock signal to said write line address counter (4y) on the basis of an output of said first coincidence detecting circuit (6) and also inhibits the supply of said read line address increment clock signal to said read line address counter (15y) on the basis of an output of said second coincidence detecting circuit (7).

## Patentansprüche

1. Zeitbasis-Korrekturvorrichtung mit
einem Speicher (5) zum Speichern eines wiedergegebenenen Videosignals, welches mittels eines rotierenden magnetischen Kopfes von schräg verlaufenden Spuren auf einem Magnetband (101) wiedergegeben worden ist, welches mit einer bezüglich einer Bandlaufgeschwindigkeit im Aufzeichnungsmodus gewünschten Bandlaufgeschwindigkeit transportiert wird,
einem In-line-Adressen-Schreibzähler (4x) zur Erzeugung eines In-line-Adressenschreibsignals und einem Zeilenadressen-Schreibzähler (4y) zur Erzeugung eines Zeilenadressen-Schreibsignals für den Speicher (5),
einer Schreibtaktsignal-Erzeugungsschaltung (3) zur Erzeugung eines In-line-Adressenzuwachs-Schreibtaktsignals und eines Zeilenadressenzuwachs-Schreibtaktsignals, welche beide mit einem horizontalen Synchronisationssignal synchronisiert sind, welches von dem wiedergegebenen Videosignal abgetrennt worden ist, und zur Zuführung derselben zu dem In-line-Adressen-Schreibzähler (4x) und dem Zeilenadressen-Schreibzähler (4y),
einem In-line-Adressen-Lesezähler (15x) zur Erzeugung eines In-line-Adressen-Lesesignals und einem Zeilenadressen-Lesezähler (15y) zur Erzeugung eines Zeilenadressen-Lesesignals für den Speicher (5), und
einer Lesetaktsignal-Erzeugungsschaltung (14) zur Erzeugung eines In-line-Adressenzuwachs-Lesetaktsignal und eines Zeilenadressenzuwachs-Lesetaktsignals, wobei beide mit einem horizontalen Referenzsynchronisationssignal synchronisiert sind, und zur Zuführung desselben zu dem In-line-Adressen-Lesezähler (15x) und dem Zeilenadressen-Lesezähler (15y),
gekennzeichnet durch
einen ersten Teiler (12) zur Erzeugung eines ersten periodischen Signals durch Teilung des wiedergegebenen horizontalen Synchronisationssignals,
einem zweiten Teiler (13) zur Erzeugung eines zweiten periodischen Signals durch Teilung des horizontalen Bezugssynchronisationssignals,
einer Detektionseinrichtung (6 bis 11) zur Feststellung, ob eine einzelne Periode des ersten periodischen Signals in einer einzelnen Periode des zweiten periodischen Signals (Fall a) oder umgekehrt (Fall b) enthalten ist, und
eine Steuereinrichtung (6, 7) zur Aufrechterhaltung der Ausgangswerte von entweder dem Zeilenadressen-Schreibzähler (4y) im Fall a) oder dem Zeilenadressen-Lesezähler (15y) im Fall b) für eine Zeilenperiode.

2. Zeitbasis-Korrekturvorrichtung nach Anspruch 1, bei welcher die Detektionseinrichtung umfaßt:
eine erste Zwischenspeicherschaltung (8) zur Zwischenpeicherung der zweiten Daten mit geteilter Frequenz auf der Basis der Daten, deren Frequenz durch zwei geteilt worden ist und welche in den zweiten Daten mit geteilter Frequenz eingeschlossen sind,
eine zweite Zwischenspeicherschaltung (9) zur Zwischenpeicherung der zweiten Daten mit geteilter Frequenz auf der Basis eines invertierten Signals der Daten, deren Frequenz durch zwei geteilt worden ist und welche in den zweiten Daten mit geteilter Frequenz eingeschlossen sind,
eine dritte Zwischenspeicherschaltung (10) zur Zwischenpeicherung der ersten Daten mit geteilter Frequenz auf der Basis der Daten, dessen Frequenz durch zwei geteilt worden ist und welche in den ersten Daten mit geteilter Frequenz eingeschlossen sind,
eine vierte Zwischenspeicherschaltung (11) zur Zwischenpeicherung der ersten Daten mit geteilter Frequenz auf der Basis eines invertierten Signals der Daten, dessen Frequenz durch zwei geteilt worden ist und welche in den ersten Daten mit geteilter Frequenz eingeschlossen sind,
eine erste Koinzidenzschaltung (6) zur Feststellung einer Koinzidenz zwischen Ausgangssignalen der ersten und zweiten Zwischenspeicherschaltung, und
eine zweite Koinzidenzschaltung (7) zur Feststellung einer Koinzidenz zwischen Ausgangssignalen der dritten und vierten Zwischenspeicherschaltung.

3. Zeitbasis-Korrekturvorrichtung nach Anspruch 1 oder 2, bei welcher die Steuereinrichtung (6, 7) die Zuführung des Zeilenadressenzuwachs-Schreibtaktsignals an den Zeilenadresssen-Schreibzähler (4y) auf der Basis eines Ausgangssignals der ersten Koinzidenz-Detektionsschaltung (6) verhindert und außerdem die Zuführung des ersten Zeilenadressenzuwachs-Lesetaktsignals an den Zeilenadressen-Lesezähler (15y) auf der Basis eines Ausgangssignals der zweiten Koinzidenz-Detektionsschaltung (7) verhindert.

## Revendications

1. Appareil de correction de base de temps comprenant une mémoire (5) pour stocker un signal vidéo reproduit qui est reproduit au moyen d'une tête magnétique tournante à partir de pistes inclinées d'une bande magnétique (101) qui est défilée à une vitesse de défilement de bande souhaitable par rapport à une vitesse de défilement de bande lors d'un mode enregistrement, un compteur d'adresse en ligne d'écriture (4x) pour générer un signal d'adresse en ligne d'écriture et un compteur d'adresse de ligne d'écriture (4y) pour générer un signal d'adresse de ligne d'écriture pour ladite mémoire (5), un circuit de génération de signal d'horloge d'écriture (3) pour générer un signal d'horloge d'incrémentation d'adresse en ligne d'écriture et un signal d'horloge d'incrémentation d'adresse de ligne d'écriture dont chacun est synchronisé avec un signal de synchronisation horizontale séparé dudit signal vidéo reproduit et pour appliquer ceux-ci sur ledit compteur d'adresse en ligne d'écriture (4x) et ledit compteur d'adresse de ligne d'écriture (4y), un compteur d'adresse en ligne de lecture (15x) pour générer un signal d'adresse en ligne de lecture et un compteur d'adresse de ligne de lecture (15y) pour générer un signal d'adresse de ligne de lecture pour ladite mémoire (5) et un circuit de génération de signal d'horloge de lecture (14) pour générer un signal d'horloge d'incrémentation d'adresse en ligne de lecture et un signal d'horloge d'incrémentation d'adresse de ligne de lecture dont chacun est synchronisé avec un signal de synchronisation horizontale de référence et pour appliquer ceux-ci sur ledit compteur d'adresse en ligne de lecture (15x) et ledit compteur d'adresse de ligne de lecture (15y),
caractérisé par :
un premier diviseur (12) pour générer un premier signal périodique en divisant le signal de synchronisation horizontale reproduit ;
un second diviseur (13) pour générer un second signal périodique en divisant le signal de synchronisation horizontale de référence ;
un moyen de détection (6 à 11) pour détecter si oui ou non un unique cycle du premier signal périodique est inclus dans un unique cycle du second signal périodique, soit un cas a), ou vice versa, soit un cas b) ; et
un moyen de commande (6, 7) pour bloquer les valeurs de sortie de soit le compteur d'adresse de ligne d'écriture (4y) dans le cas a), soit le compteur d'adresse de ligne de lecture (15y) dans le cas b) pour une période d'une ligne.

2. Appareil de correction de base de temps selon la revendication 1, dans lequel ledit moyen de détection comprend :
un premier circuit de bascule (8) pour verrouiller lesdites secondes données divisées en fréquence sur la base de données divisées en fréquence 1/2 mises en jeu dans lesdites secondes données divisées en fréquence, un second circuit de bascule (9) pour verrouiller lesdites secondes données divisées en fréquence sur la base d'un signal inversé des données divisées en fréquence 1/2 mises en jeu dans lesdites secondes données divisées en fréquence, un troisième circuit de bascule (10) pour verrouiller lesdites premières données divisées en fréquence sur la base des données divisées en fréquence 1/2 mises en jeu dans lesdites premières données divisées en fréquence, un quatrième circuit de bascule (11) pour verrouiller lesdites premières données divisées en fréquence sur la base d'un signal inversé des données divisées en fréquence 1/2 mises en jeu dans lesdites premières données divisées en fréquence, un premier circuit de détection de coïncidence (6) pour détecter une coïncidence entre des sorties desdits premier et second circuits de bascule et un second circuit de détection de coïncidence (7) pour détecter une coïncidence entre des sorties desdits troisième et quatrième circuits de bascule.

3. Appareil de correction de base de temps selon la revendication 1 ou 2, dans lequel ledit moyen de commande (6, 7) inhibe l'application dudit signal d'horloge d'incrémentation d'adresse de ligne d'écriture sur ledit compteur d'adresse de ligne d'écriture (4y) sur la base d'une sortie dudit premier circuit de détection de coïncidence (6) et inhibe également l'application dudit signal d'horloge d'incrémentation d'adresse de ligne de lecture sur ledit compteur d'adresse de ligne de lecture (15y) sur la base d'une sortie dudit second circuit de détection de coïncidence (7).
